# EUROPEAN PATENT APPLICATION

(11) **EP 4 552 772 A1**
(43) Date of publication of application: **14.05.2025**
(21) Application number: 24210882.7
(22) Date of filing: 05.11.2024
(51) Int. Cl.: B23B 35/00, B23B 39/00, B23B 51/04, B23B 51/08, B23B 51/10

(54) **DRILLING APPARATUS AND METHOD**

(30) Priority: 07.11.2023 IT 202300023445
(71) Applicant: C.M.S. S.p.A., 24019 Zogno (BG) (IT)
(72) Inventor: GHISALBERTI, Oliviero, 24019 Zogno (BG) (IT)
(74) Representative: Luppi Intellectual Property S.r.l.

(57) **Abstract**

Drilling apparatus and method for making a through hole through the thickness of a workpiece (P) by a circular cutting edge of an internally hollow tool (1) which performs a rotational motion around a tool axis and an advancement motion along said tool axis, in which a depression is generated in a cavity (2) inside said tool during drilling, a depression that exerts on the workpiece a force (F1) that opposes a thrust force (F2) of the tool, in order to avoid the material of the workpiece breaking in an outlet zone of the tool exiting the thickness of the workpiece.

## Description

### Background of the invention

The invention relates to a drilling apparatus and method, in particular in a CNC machining centre with three, or four, or five controlled axes.

Specifically, but not exclusively, the invention in question can be used to make through holes in glass sheets, although the invention in question can be used for slabs made of other materials like, for example, stone materials like marble, granite, sintered stone, etc or still others.

One of the problems that arises in the prior art when glass or stone materials are drilled in both horizontal and vertical machining centres is the breakage of the material in the outlet zone from which the drilling tool exits the workpiece.

This breakage occurs, in general, when the drilling tool (a bit with a hollow core) reaches near the outlet of the hole, as the thrust force of the tool, normally added to the thrust force of the lubricating/cooling liquid (water) sprayed inside the tool, overcomes the resistance of the material, and thus yields, before the tool has exited the hole, causing external breakages in the hole.

This is not acceptable from the aesthetic point of view or because often the (glass) workpiece is subsequently hardened and the breakages outside the hole cause drawbacks due to the stress of the hardening.

Accordingly, mostly, one is obliged to resort to machining tasks after drilling to correct chips or other irregularities caused by the breakage.

Avoiding the aforesaid breakage by using two drilling tools that are opposite one another to perform drilling on both sides of the workpiece is known. Even this solution is not however satisfactory for different reasons.

A spindle placed opposite is often available in a vertical machining centre but is generally absent in a horizontal machining centre that, in order to drill a hole, has to be provided with a suitable aggregate that will increase the cost thereof.

For example, a horizontal machining centre is known with a drilling system provided with a transmission that enables the workpiece to be drilled from below, but which suffers from certain drawbacks: it needs a fourth controlled axis, it is hardly versatile for making holes of different diameters (it in fact requires the use of several angular transmissions, or the manual replacement of the drilling tool with consequent loss of time), does not allow holes with large diameter to be drilled or holes to be drilled from below that are very far from the edge of the workpiece, requires special positioning of the workpiece support system to prevent a collision with the transmission, occupies one or more stations in the tool change, etc.

Further, even for a vertical machining centre, the solution with an opposite spindle is not economically advantageous, especially when the number of holes to be drilled is not great.

Another drawback lies in the difficulty of drilling two partial opposite holes that are exactly coaxial with one another.

### Summary of the invention

One object of the invention is to overcome one or more of the aforesaid limits and drawbacks of the prior art.

One object is to devise an apparatus and/or a drilling method that are alternative to those of the prior art.

One object is to improve apparatuses and methods of known type for drilling glass or other materials in CNC machining centres.

One object is to provide an apparatus and/or a method for making a through hole in a workpiece (in particular, a sheet of glass or another material) without breakage of the material in the outlet zone from which the drilling tool exits the workpiece.

One advantage is to provide an apparatus and/or a drilling method for drilling a through hole correctly in a workpiece made of glass (or of a stone or synthetic material or another material at risk of breakage in the outlet zone of the hole) without the use of two opposite drilling tools operating on two opposite sides of the workpiece.

One advantage is to make available a drilling apparatus (in particular for sheets of glass) that is constructionally cheap and simple.

One advantage is to enable a hole to be drilled, also in the context of a horizontal machining centre, without causing the material to break in the outer part of the drilling zone of the workpiece, with a wide range of diameters of the drilling tool, without resorting to subsequent machining to correct chips or other imperfections.

One advantage is to make a horizontal machining centre that is able to perform correct drilling without using special costly aggregates to avoid breakages of the material in the lower part of the drilling zone of the workpiece.

One advantage is to devise a vertical machining centre that is able to perform correct drilling without using a second opposite spindle.

One advantage is to provide an apparatus and/or a drilling method that is usable in a CNC machining centre, for example with five controlled axes, to perform drilling in the space with a great possibility of innumerable orientations.

Such objects and advantages, and still others are achieved by an apparatus and/or a drilling method according to one or more of the claims set out below.

In one embodiment, a drilling method comprises drilling a thickness of a workpiece by a circular cutting edge of a drilling tool with a hollow core which performs a rotational motion around a tool axis and an advancement motion in the thickness of the workpiece along the tool axis and generates a depression in a cavity of the drilling tool so that the depression is present on a surface of the workpiece inside the tool during drilling, to exert on the workpiece a force that opposes a thrust force of the tool, in order to avoid breakage of the material of the workpiece in an outlet zone in which the drilling tool exits the thickness of the workpiece.

The depression generating step may start, in particular, when the cutting edge of the drilling tool is at a distance from a drilling end of the thickness that is greater than 1 mm and/or less than 3 mm.

The drilling method may comprise, in particular, the step of dispensing an operating liquid (for example, cooling/lubricating water) through the cavity of the drilling tool and thus interrupting the aforesaid dispensing of the operating liquid before or at the moment of generating the aforesaid depression.

The drilling method may comprise, in particular, the step of dispensing an operating liquid outside the drilling tool also during generation of the depression so that at least one part of the sucked operating liquid can be sucked by the depression inside the drilling tool.

It is possible to provide, in particular, for the advancement motion of the tool during drilling being performed at at least one first speed (considering an average advancement speed) before generating the depression and at at least one second speed (always considering an average advancement speed) whilst the depression is generated, in which the second (average) speed is less than the first (average) speed.

The second (average) speed may be, in particular, less than 20% or 30% of the first (average) speed. For example, the second speed may be the same as about 60 mm/min and the first speed may be the same as about 10 mm/min.

Whilst the depression is generated, a first axial force F1 exerted through the effect of the depression on the surface of the workpiece inside the tool (i.e. the part destined to form the cutting waste, i.e. the plug or inner core) will oppose a second axial force F2 exerted on the workpiece by the tool. The process may in particular operate so that the force F1 is greater than or the same as the force F2.

The drilling method may comprise, in particular, a step of expelling cutting waste from the cavity of the drilling tool, in which, once the through hole is drilled, a liquid is dispensed (for example, the operating liquid provided during cutting for cooling/lubrication) and/or a gas (for example, an air jet obtained by reversing the pneumatic suction means provided for generating the depression) through the cavity of the drilling tool to push the waste outside.

### Brief description of the drawings

The invention can be better understood and implemented with reference to the attached drawings, which illustrate embodiments thereof by way of non-limiting example, in which:
Figure 1 is a raised vertical view of one embodiment of a drilling apparatus, made according to the invention, in a first operating configuration before starting drilling a through hole;
Figure 2 is the view of the apparatus of Figure 1 in a second operating configuration during drilling of the through hole in which the drilling tool has come near (about 2 mm from) the end of the hole;
Figure 3 is the view of the apparatus of Figure 1 in a third operating configuration in which the drilling tool has come to the end of the hole;
Figure 4 is the view of the apparatus of Figure 1 in a fourth operating configuration in which the through hole has been drilled and the machining waste (plug or core) inside the tool has been evacuated;
Figure 5 is a perspective view of a horizontal machining centre that comprises the drilling apparatus of Figure 1;
Figure 6 is a perspective view of a vertical machining centre to which a drilling apparatus according to this invention is fittable;
Figure 7 shows a drilling tool that is usable in a drilling apparatus and provided with two abrasive surfaces for chamfering the edges of the hole;
Figure 8 shows a step of chamfering an edge of a hole drilled by one of the abrasive surfaces of the drilling tool of Figure 7.

### Detailed description

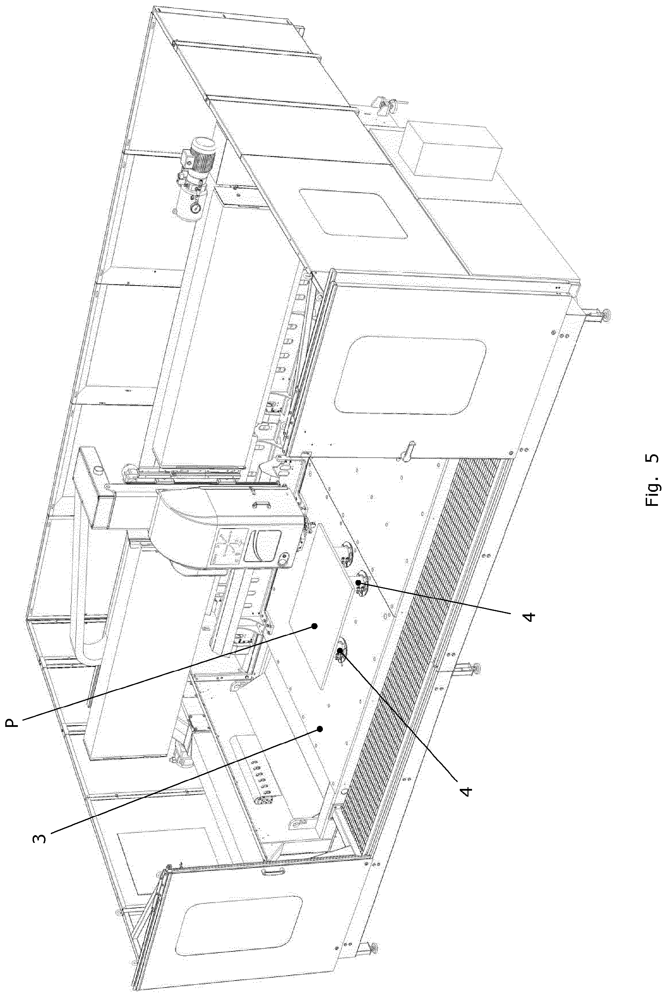

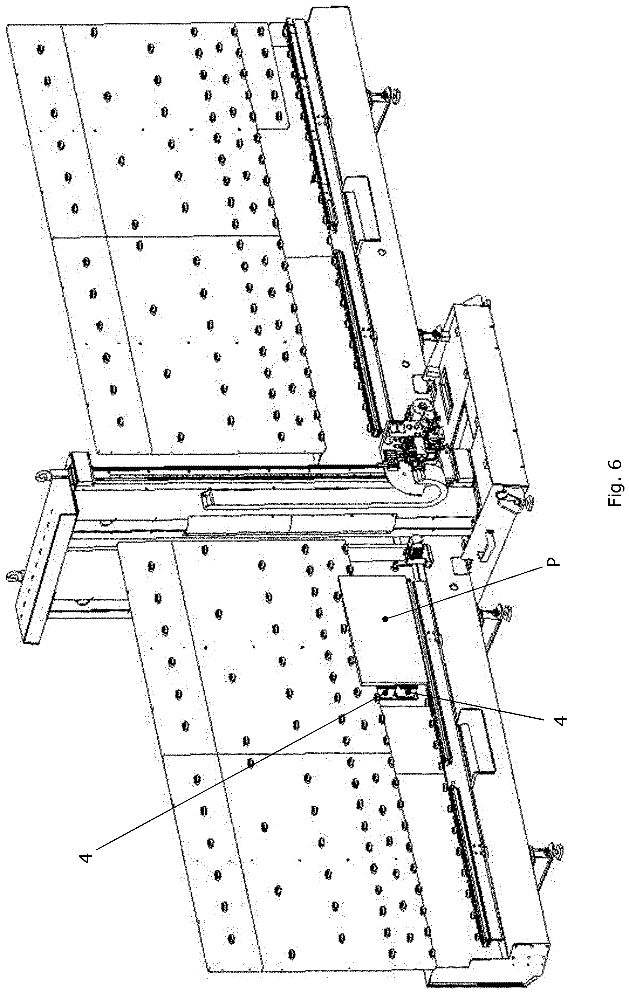

With reference to the aforesaid figures, a drilling apparatus is disclosed that is usable, in particular, in a numerically controlled machining centre like, for example, a horizontal machining centre like that of Figure 5 (in which the axis of the hole and thus the axis of the drilling tool is generally vertical) and/or a vertical machining centre like that of Figure 6 (in which the axis of the hole and thus the axis of the drilling tool is generally horizontal).

The drilling apparatus may be used, in particular, to drill at least one through hole on a workpiece P made of glass, or also of other materials, like, for example, ceramics, marble, granite, synthetic or sintered material, etc. The workpiece P to be drilled may comprise, in particular, a slab.

The drilling apparatus may be used, in particular, in a numerically controlled machining centre with three, or four, or five controlled axes, like, for example, the horizontal machining centre of Figure 5 or the vertical machining centre of Figure 6.

The drilling apparatus comprises an internally hollow drilling tool 1 with a circular cutting edge configured to drill a thickness of a workpiece P. The drilling tool 1 comprises internally a cavity 2 open at one end. This inner cavity 2 has an opening bounded by the circular cutting edge. The drilling tool 1 may comprise, in particular, a hollow cylindrical tip.

The drilling apparatus may comprise, in particular, a support plane 3 (for example, a horizontal table of a horizontal machining centre). The drilling apparatus may comprise, in particular, locking means 4 for supporting and locking the workpiece P in the work position. The locking means 4 may comprise, in particular, a plurality of suction cups that are positionable on the support plane 3.

The drilling apparatus comprises moving means for moving the drilling tool 1 with a rotational motion around a tool axis (an axis that is orthogonal to the circular cutting edge and passing through the centre of the circular cutting edge, in practice the axis of the hollow cylindrical tip) and at least with an advancement motion along the tool axis. The movement means may comprise, in particular, the movement means of the machining centre configured to control a machining head that carries the tool 1 on one or more (for example, three, four or five) controlled axes.

The drilling apparatus comprises pneumatic suction means configured to generate a depression in a cavity 2 of the drilling tool 1 such that, during drilling through the thickness of the workpiece P, the depression is present and operates on a surface of the workpiece P around the drilling tool 1. This depression determines a force on the workpiece opposing a thrust force of the tool 1. In the specific embodiment, the force determined by the depression is directed upwards and the thrust force of the tool 1 is directed downwards.

The pneumatic suction means may comprise, in particular, a pneumatic circuit (not shown) configured to connect the cavity 2 inside the drilling tool 1 to a vacuum pump, in particular a vacuum pump (for example a liquid ring pump) with which a machining centre is generally provided for the operation of the locking means (for example, the locking means 4) arranged for locking by suction the workpiece P being machined, in which the vacuum pump enables the suction means to be blocked on a workbench (for example, the support plane 3), and the workpiece P to be blocked by the same suction means.

The pneumatic circuit may comprise, in particular, at least one or more pneumatic pipes communicating with the vacuum pump. The pneumatic circuit may comprise, in particular, a rotating pneumatic joint connected to the rotating drilling tool to permit pneumatic communication with the cavity 2. The pneumatic circuit may comprise, in particular, a valve system that can be commanded to close or open communication with the vacuum pump and/or to select the operating mode (in particular, the air depression or blowing mode).

The drilling apparatus may comprise, in particular, gas dispensing means configured to dispense a gas through the cavity 2 of the drilling tool 1 so as to generate blowing towards the outlet opening of the cavity 2 so as to promote the expulsion of machining waste S (glass plug or core) that may remain inside the cavity after cutting.

The dispensing means gas may comprise, in particular, the pneumatic circuit used to generate the depression, in which the valve system can be so commanded as to select operation in blowing mode.

The drilling apparatus may comprise, in particular, first dispensing means configured to dispense a flow W of an operating liquid (for example, water for cooling and/or lubricating the cutting zone) through the aforesaid cavity 2 of the drilling tool 1.

The drilling apparatus may comprise, in particular, second dispensing means for dispensing an operating liquid (for example, water for cooling and/or lubricating the cutting zone) outside the drilling tool.

The first and the second dispensing means may comprise, in particular, dispensing means that sprays the cooling/lubricating liquid inside and outside the drilling tool normally present in a drilling apparatus.

The drilling apparatus may comprise, in particular, (electronic and programmable) control means configured to start to generate the depression when the cutting edge of the drilling tool 1 arrives at a distance from a drilling end of the thickness of the workpiece P that is greater than 1 mm and/or less than 3 mm (for example, at a distance comprised between 1.5 mm and 2.5 mm, in particular almost equal to 2 mm). This depression activating distance can be chosen on the basis of various factors like, for example, the material of the workpiece P and/or the type of tool 1 and/or the advancement speed, etc.

The control means may comprise, in particular, the numerical control of the machining centre or may be connected to the numerical control.

The control means may be configured, in particular, for controlling the first dispensing means so as to dispense the operating liquid through the aforesaid cavity 2 of the tool 1 before generating the depression so as to interrupt the aforesaid dispensing before, or at the moment of, generating the depression.

The control means may be configured, in particular, for controlling the second dispensing means so as to dispense the operating liquid outside the drilling tool 1 also whilst the suction means is generating the depression, so that at least one part of the operating liquid dispensed outside can be sucked by the depression also inside the tool 1.

The control means may be configured, in particular, for controlling the advancement motion of the tool 1 at at least one first speed (for example, a constant speed or an average speed) before generating the depression and at least one second speed (constant or average speed) during generation of the depression. The second speed is less than the first speed. The second speed may be, in particular, less than 10% or 20% or 30% of the first speed.

The control means may be configured, in particular, so as to control the first dispensing means of the operating liquid and/or the dispensing means of a gas so as to dispense a flow J of a liquid and/or a gas through the cavity 2 after drilling a hole so as to expel the waste S.

As has been seen, the method in question exploits a depression generated during drilling inside the cavity 2 of the drilling tool 1 to exert a force, which is applied to the portion of workpiece inside the tool 1, which opposes the force exerted on the workpiece by the tool 1 that is drilling the hole.

The means for generating the depression is in general already in place, at least partially, in a machining centre, in particular a vacuum pump for locking the workpiece P being machined by suction (with suction cup means).

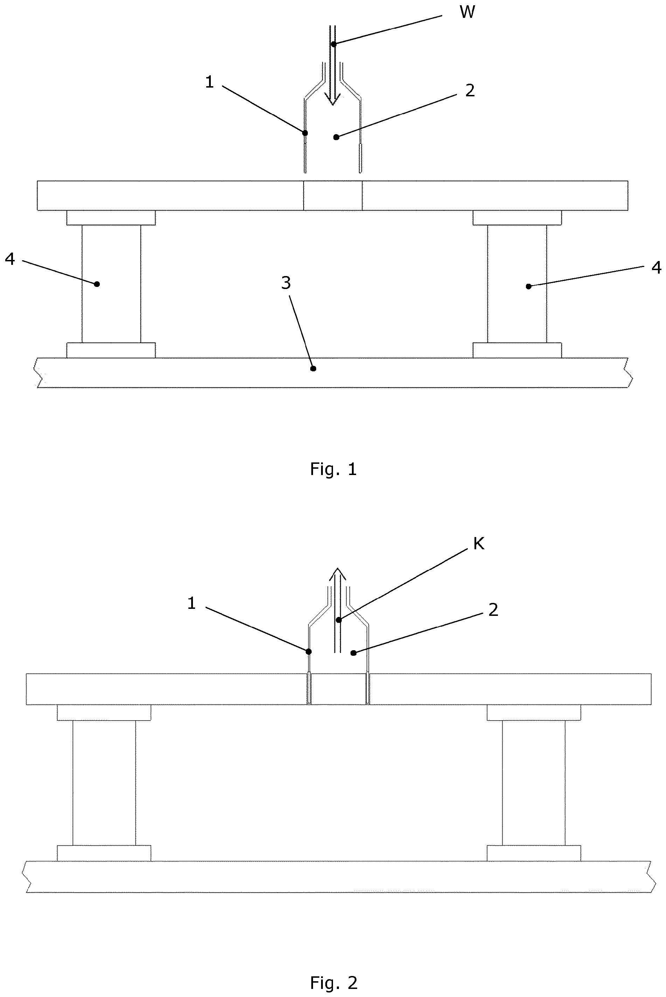

Figures 1 to 4 show one specific embodiment of a drilling method according to the invention, in which the axis of the hole is vertical (for example, in a horizontal machining centre).

Drilling starts (Figure 1) with the hollow drilling tool 1 that enters the material of the workpiece P at an advancement speed that is suitable for drilling the hole (for example, an advancement speed of about 60 mm/min).

An operating liquid (cooling/lubricating liquid, generally water) is sprayed on the drilling zone both inside and outside the drilling tool. In Figure 1 the arrow W indicates an inlet flow of the operating liquid inside the cavity 2 of the drilling tool 1.

This advancement step continues until the front cutting edge of the tool 1 reaches a given distance (for example 2 mm) from the end of the hole, i.e. from the exit of the tool 1 from the hole on the opposite side (in this embodiment the lower side) of the workpiece P.

Whether the desired distance of the cutting edge from the end of the hole has been reached can be determined, in particular, by the control means (for example, the numerical control of the machining centre) of the drilling apparatus, on the basis of the knowledge of the thickness of the workpiece and/or on the basis of signals sent by sensor means arranged for detecting the position of the cutting edge of the drilling tool.

At the moment of reaching the desired distance (Figure 2), the stop of dispensing of the operating liquid inside the cavity 2 of the drilling tool 1 is commanded (whereas dispensing the operating liquid outside the tool 1 will continue), so the thrust force (downwards) will cease that was until that moment exerted by the operating liquid on the portion of the workpiece inside the tool.

At the same moment, the advancement speed of the tool may be reduced (in particular may be reduced by less than 30%, or 20%, or also 10%) of the advancement speed of the tool, for example by taking the advancement speed up to about 10 mm/min, with resulting reduction of the thrust force (downwards) exerted by the drilling tool on the workpiece.

Each of these two (optional) actions causes a reduction of the thrust force on the workpiece P in one direction (downwards). At the same time, the depression is generated inside the hollow tool that will give rise to a sucking force on the workpiece in the opposite direction (upwards). In Figure 2 the arrow K indicates a gas sucking flow that generates the depression inside the cavity of the drilling tool.

This depression, by opposing the thrust force (downwards) of the tool 1 (i.e. by pulling upwards), will tend to make the portion of material of the workpiece situated in the zone of the hole rise upwards towards the inside of the cavity 2 of the drilling tool, the portion being destined to form machining waste S.

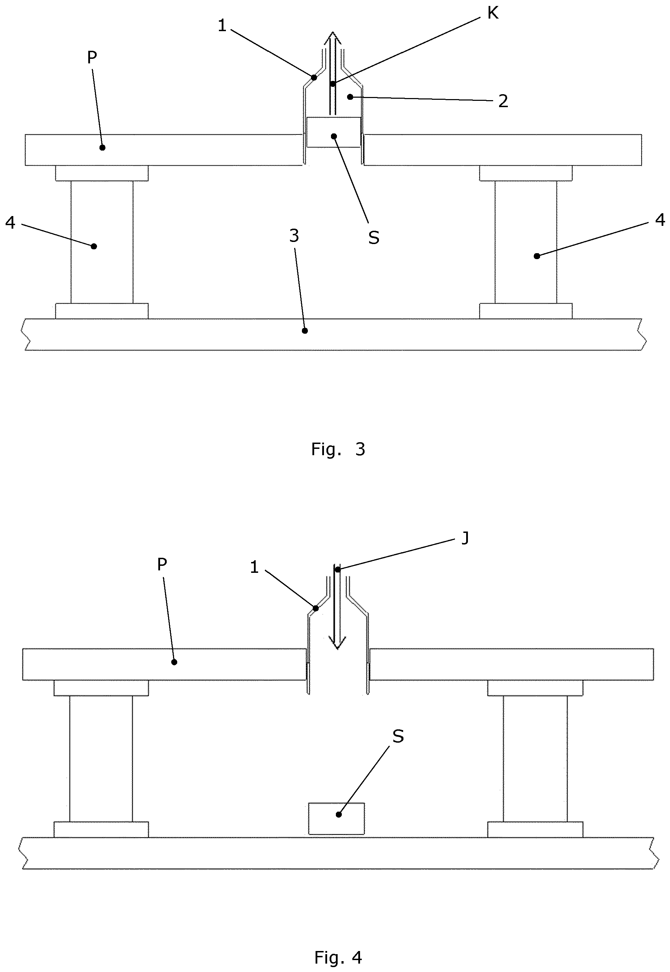

Figure 3 illustrates one embodiment of what can occur in this drilling step. It is in fact possible for the result of the forces applied to the aforesaid portion of material in the hole to be a force directed towards the inside of the tool (in this case, upwards), so that, at a certain point, by continuing the cutting advancement (cut has now arrived at the end), this resulting force, by overcoming the resistance of the material that is increasingly weakened by the advancement of the tool 1 (at reduced speed), will cause the portion of material to separate in the hole from the rest of the material of the workpiece (Figure 3).

In practice, in this final part of the drilling, the drilling tool 1 continues to push on the workpiece (downwards), but the thrust force F2 thereof is neutralized by the pulling force (upwards) caused by the depression inside the tool.

It is possible for the force F 1 to be about equal to the force F2, so that the resulting force on the portion of material is nil, or the force F1 is greater than the force F2, so that the material may break in the zone of the hole, but would be anyway a breakage facing the inside of the hole, so that possible breakage residues can be cleaned by the drilling tool 1, which will continue its advance (downwards) also beyond the end of the hole, for example about 2 mm beyond the lower side of the workpiece (see Figure 4).

When the through hole has been completed, the depression is interrupted and dispensing of the operating liquid inside the hollow tool and/or dispensing of an air jet resumes (that means that also dispensing of a flow J of liquid mixed with gas, or of only gas or of only liquid is possible) to evacuate the waste S (plug or core) inside the hollow tool.

In the specific embodiment of Figures 1 to 4, in which the support plane 3 is horizontal and the hole to be made has a vertical axis, the drilling apparatus is fittable to a horizontal machining centre like that of Figure 5. It is nevertheless possible to fit the drilling apparatus to a vertical machining centre, like that of Figure 6, bearing in mind that the axis of the drilling tool can be arranged horizontally to drill a horizontal hole on a slab arranged vertically, for example on a horizontal roller conveyor and/or gripped on a suction gripping device with locking means 4 of the suction cup type. Also, in the case of fitting to a vertical machining centre, the suction means for generating the depression in the cavity 2 of the drilling tool 1 may comprise the actuating means present in the vertical machining centre to drive the gripping device for gripping the workpiece by suction.

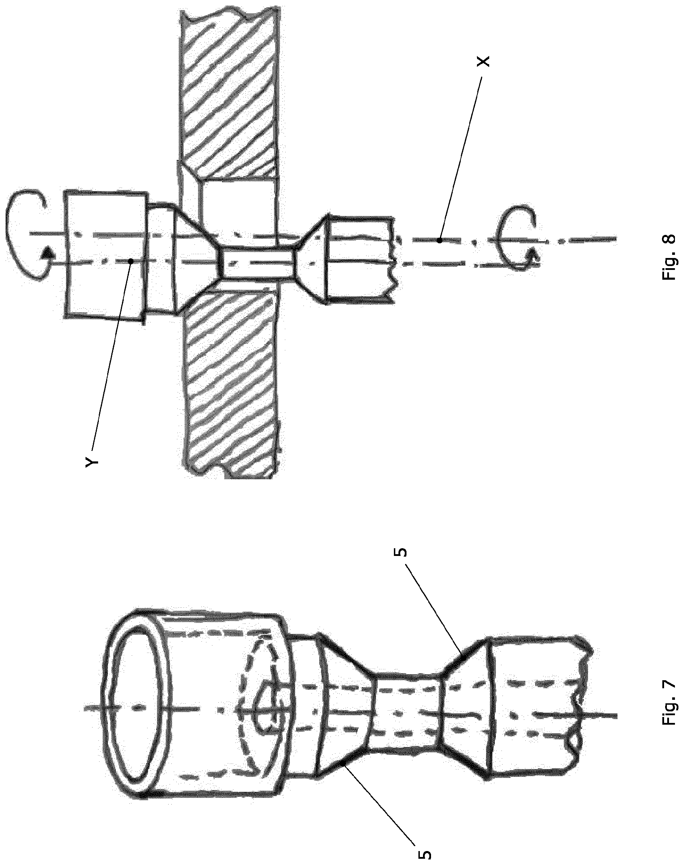

In the specific embodiment of Figures 7 and 8, it is possible to obtain through holes of acceptable quality, in particular without microfractures on the edges of the holes, especially on the outlet side from which the tool exits the glass, securely and reliably, substantially in any operating condition (sharpening of the tool, position of the hole with respect to the edges of the slab, thickness of the slab, alignment of the machine, etc).

In this embodiment (Figures 7 and 8), the hollow drilling tool ("drill") is so modified that the tool comprises one or two abrasive surfaces 5, each configured to make a respective chamfer, in particular an abrasive surface 5 configured to make a chamfer on the inlet edge of the hole from the (glass) slab and/or an abrasive surface 5 configured to make a chamfer on the outlet edge of the hole from the (glass) slab. In this manner, after drilling the slab, it is possible, for machining safety or necessity, to make a chamfer without tool change, on at least one or on each of the edges of the hole. In particular, the tool may comprise two abrasive surfaces 5, each of frustoconical shape, shaped and arranged with opposite tilts and facing one another.

In order to chamfer with the tool, as illustrated by way of non-limiting example in the enclosed images, the spindle may follow a circular trajectory around the axis of the hole whilst the tool rotates around its own axis, coinciding with the axis of the spindle.

In Figure 8, the (vertical) axis X of the hole is visible on the right, which coincides with the drilling axis and thus with the axis of the spindle during the drilling operation, and, on the left, the (vertical) Y axis of the spindle during creation of a chamfer (Y axis not coaxial with the X axis of the spindle during drilling) in which the Y axis is commanded to follow a circular trajectory around the X axis.

The solution of Figures 7 and 8, with one or two abrasive surfaces 5 integrated into the tool to generate respective chamfers, enables just one spindle to be used to drill the glass, in particular on vertical machines, with resulting simplification and financial saving, without limiting drilling functionality.

The solution proposed here enables glass slabs to be drilled using only one spindle instead of two opposite spindles.

Further, the solution enables tasks to be performed by removing a relatively small amount of material by an internally hollow drilling tool that then removes by abrasion only a circular crown of material adjacent to the outer diameter of the hole and not all the area of the hole.

## Claims

1. Drilling method comprising a step of drilling a thickness of a workpiece (P) with a circular cutting edge of an internally hollow tool (1) which performs a rotational motion around a tool axis and an advancement motion along said tool axis, and a step of generating a depression in a cavity (2) of said tool (1) such that said depression is present on a surface of said workpiece (P) around said tool (1) during said drilling step.

2. Method according to claim 1, wherein said depression generating step begins when said cutting edge is at a distance from a drilling end of said thickness that is greater than 1 mm and/or less than 3 mm.

3. Method according to claim 1 or 2, comprising the step of dispensing an operating liquid through said cavity (2) and interrupting said dispensing before, or when, generating said depression.

4. Method according to any one of the preceding claims, comprising the step of dispensing an operating liquid outside said tool (1) also during said depression generating step so that at least one part of the dispensed operating liquid is sucked inside said tool (1).

5. Method according to any one of the preceding claims, wherein said advancement motion during said drilling is performed at at least one first speed before said depression generating step and at at least one second speed during said depression generating step, said at least one second speed being less than said at least one first speed.

6. Method according to claim 5, wherein said at least one second speed is less than 30% of said at least one first speed.

7. Method according to any one of the preceding claims, wherein, during said depression generating step, a first axial force F1 exerted on said workpiece (P) through the effect of said depression is opposed to a second axial force F2 exerted on said workpiece (P) by said tool (1); said depression force F1 being, in particular, greater than or equal to said tool force F2.

8. Method according to any one of the preceding claims, wherein:
- said method comprises, after said drilling step, a step of dispensing a liquid and/or a gas through said cavity (2) to expel machining waste (S) from the cavity itself; and/or wherein
- said depression generating step comprises operating pneumatic suction means, in particular pneumatic suction means used for driving locking means (4) configured to immobilize the workpiece (P) by suction; and/or wherein
- said workpiece (P) is made of glass, ceramics, marble, granite, synthetic or sintered material, and/or in which said workpiece (P) comprises a slab.

9. Method according to any one of the preceding claims, comprising, after said drilling step in which a hole has been obtained, a step of making a chamfer on an inlet edge of said hole by an abrasive surface (5) integrated with said tool (1) and/or a chamfer on an outlet edge of said hole by an abrasive surface (5) integrated with said tool (1).

10. Drilling apparatus, in particular in a numerically controlled machining centre, comprising an internally hollow tool (1) with a circular cutting edge configured to drill a thickness of a workpiece (P), moving means for moving said tool (1) with a rotational motion around a tool axis and with an advancement motion along said tool axis, and pneumatic suction means configured to generate a depression in a cavity (2) of said tool so that said depression is present on a surface of the workpiece (P) inside said tool (1) during a step of drilling the thickness of the workpiece.

11. Apparatus according to claim 10, comprising control means configured to start to generate said depression when said cutting edge is at a distance from a drilling end of the thickness that is greater than 1 mm and/or less than 3 mm.

12. Apparatus according to claim 10 or 11, comprising first dispensing means for dispensing an operating liquid through said cavity (2), and control means for controlling said first dispensing means so as to dispense the operating liquid through said cavity (2) before generating said depression and interrupting said dispensing before, or when, generating said depression.

13. Apparatus according to any one of claims 10 to 12, comprising:
- second dispensing means for dispensing an operating liquid outside said tool (1), and control means for controlling said second dispensing means so as to dispense the operating liquid outside said tool even whilst said suction means is generating said depression so that at least one part of the dispensed operating liquid is sucked inside said tool; and/or
- means for dispensing an operating liquid through said cavity (2) and/or means for dispensing a gas through said cavity (2), and control means configured to control said means for dispensing a liquid and/or said means for dispensing a gas so as to dispense a liquid and/or a gas through said cavity (2) after drilling a hole so as to expel machining waste (S) from the cavity itself.

14. Apparatus according to any one of claims 10 to 13, comprising control means configured to control said advancement motion at at least one first speed before generating said depression and at least one second speed whilst said depression is generated, said at least one second speed being less than said at least one first speed.

15. Apparatus according to any one of claims 10 to 14, comprising an abrasive surface (5) integrated with said tool (1) and arranged for making a chamfer on an inlet edge of a hole obtained by said tool (1) and/or an abrasive surface (5) integrated with said tool (1) and arranged for making a chamfer on an outlet edge of a hole obtained by said tool (1).
